# EUROPEAN PATENT SPECIFICATION

(11) **EP 3 717 851 B1**
(45) Date of publication and mention of the grant of the patent: **16.03.2022**
(21) Application number: 18804347.5
(22) Date of filing: 26.11.2018
(51) Int. Cl.: F26B 3/04

(54) **SHEET DRYING METHOD AND ARRANGEMENT**
BAHNTROCKNUNGSVERFAHREN UND -ANORDNUNG
PROCÉDÉ ET AGENCEMENT DE SÉCHAGE DE FEUILLES

(30) Priority: 28.11.2017 EP 17306648
(43) Date of publication of application: 07.10.2020
(73) Proprietor: Etex Building Performance International SAS, 84915 Avignon (FR)
(72) Inventor: MOESCH, Pierre, 30400 Villeneuve-les-Avignon (FR); RIGAUDON, Michel, 84330 Caromb (FR)
(74) Representative: Etex Services NV - Etex IPSC
(86) International application number: PCT/EP2018/082542
(87) International publication number: WO 2019/105888

(56) References cited:
- EP-A1- 0 127 761
- WO-A1-2004/109003
- WO-A1-2014/168559
- DE-A1- 2 613 512
- DE-C1- 4 447 311
- US-A- 2 722 752
- US-A- 4 255 870

## Description

### FIELD OF THE INVENTION

The present invention relates to a method for drying articles to be dried, in particular sheet materials such as plasterboard; and a corresponding arrangement for drying articles to be dried.

### BACKGROUND OF THE INVENTION

In the manufacture of sheet materials such as plasterboard, board drying constitutes a large part of the energy costs. In order to reduce these costs, the amount of water used for the board manufacturing is often reduced to a minimum. Even then, drying costs typically form a significant portion of the total manufacturing costs.

A further measure to reduce drying costs is by improving the efficiency of the drying process. Patent application DE 26 13 512 describes a two-stage method for drying plasterboard, wherein heat from the first stage is recovered and used for heating the boards in the second stage. Although this method allows for reducing the primary energy needed (i.e. energy needed for warming the drying air), the low temperature in the second stage requires a large mass flow, leading to a high consumption of secondary energy (i.e. energy needed for air circulation). Therefore, patent US 5,659,975 proposes a two-stage method wherein heat from the exhaust drying air from the first stage is recovered and used for pre-heating the drying air in the second stage. The drying air in the second stage is further heated using a burner. In this way, a higher temperature in the second stage is obtained.

There remains a need for methods for drying plasterboard with reduced energy consumption.

### SUMMARY OF THE INVENTION

It is an object of the present application to provide methods and arrangements for drying sheet materials such as plasterboard, having a low energy consumption.

The present inventors found that the use of relatively low drying temperatures in combination with a plurality of warm drying zones can allow for a significant reduction in the primary energy consumption, wherein the use of a plurality of warm zones can ensure that the increase in secondary energy consumption does not nullify the reduction of the primary energy consumption. Further improvements could be obtained by using scrubbers and/or air/liquid heat exchangers for heat recovery, and by using impinging jet nozzles.

The independent and dependent claims set out particular and preferred features of the invention. Features from the dependent claims may be combined with features of the independent or other dependent claims, and/or with features set out in the description above and/or hereinafter as appropriate.

The above and other characteristics, features and advantages of the present invention will become apparent from the following detailed description which illustrates, by way of example, the principles of the invention. This description is given for the sake of example only, without limiting the scope of the invention.

### BRIEF DESCRIPTION OF THE DRAWINGS

The accompanying Figures are provided by way of example only and should not be considered to limit the scope of the present invention.
- **Fig. 1**: Schematic illustration of a particular embodiment of an arrangement for drying sheets as described herein.
- **Fig. 2**: Schematic illustration of a particular embodiment of an arrangement for drying sheets as described herein.

In the Figures, the following numbering is used:
1 - conveyor; 2 - sealing zone; 3 - hot zone; 4 - warm zone; 5 - fresh first drying medium; 6 - burner; 7 - exhaust conduit; 8 - heat exchanger; 9a, 9b - heat exchanger; 10 - fresh second drying medium; 11 - conduit; 12 - start-up phase burner; 13 - shutdown phase burner; 14 - heat exchanger; 15 - closed circuit.

### DETAILED DESCRIPTION

The present invention will be described with respect to particular embodiments.

It is to be noticed that the term "comprising", used in the claims, should not be interpreted as being restricted to the means listed thereafter; it does not exclude other elements or steps. It is thus to be interpreted as specifying the presence of the stated features, steps or components as referred to, but does not preclude the presence or addition of one or more other features, steps or components, or groups thereof. Thus, the scope of the expression "a device comprising means A and B" should not be limited to devices consisting only of components A and B. It means that with respect to the present invention, the only relevant components of the device are A and B.

Throughout this specification, reference to "one embodiment" or "an embodiment" are made. Such references indicate that a particular feature, described in relation to the embodiment is included in at least one embodiment of the present invention. Thus, appearances of the phrases "in one embodiment" or "in an embodiment" in various places throughout this specification are not necessarily all referring to the same embodiment, though they could. Furthermore, the particular features or characteristics may be combined in any suitable manner in one or more embodiments, as would be apparent to one of ordinary skill in the art. The following terms are provided solely to aid in the understanding of the invention.

The term "about" as used herein when referring to a measurable value such as a parameter, an amount, a temporal duration, and the like, is meant to encompass variations of +/-10% or less, preferably +/-5% or less, more preferably +/-1% or less, and still more preferably +/-0.1 % or less of and from the specified value, insofar such variations are appropriate to perform in the disclosed invention. It is to be understood that the value to which the modifier "about" refers is itself also specifically, and preferably, disclosed.

Provided herein is a method for drying articles to be dried, in particular sheet materials. The term "drying" as used herein refers to the process of reducing the water content of the articles to be dried. It does not necessarily mean that all water is removed from the articles, although typically most of the unbound water will be removed; e.g. at least 95% of the unbound water, preferably at least 99%. The term "unbound water" refers to water which is not part of the chemical structure of the articles to be dried. For example, gypsum (CaSO₄.2H₂O) contains water molecules which are part of gypsum's chemical structure; and which therefore are not meant to be removed upon drying.

The method described herein comprises a main phase, and optionally further comprises a start-up phase (preceding the main phase) and/or shutdown phase (following the main phase). Unless stated otherwise, the present description applies to the main phase and the start-up phase.

In the method described herein, the articles to be dried are advanced along a path along at least one hot drying zone (also referred to herein as "hot zone") and a plurality of warm drying zones (also referred to herein as "warm zones") downstream of the hot drying zone(s); i.e. along their path, the articles to be dried enter the hot zone(s) prior to entering the warm zones.

The term "zone" as used herein refers to a drying chamber which can be individually aerated and heated. Accordingly, each zone can be individually set to a particular temperature independently of the other zones. In the present method, the hot drying zone(s) have a higher temperature than the warm drying zones.

The one or more hot drying zones are preferably kept at a temperature above 140°C. This is done by heating a first drying medium to a temperature above 140°C via heating means; followed by directing the heated first drying medium to the articles to be dried in the hot drying zone(s). The heated first drying medium is fed to the hot drying zone(s) and exhaust first drying medium is removed from the hot drying zone(s) in a continuous way as is known in the art. The exhaust first drying medium has a lower temperature compared to the heated first drying medium entering the hot drying zone(s), but still contains sufficient heat energy (also referred to herein as "heat") for the warm drying zones. The skilled person will understand that the heat energy provided to the first drying medium should be sufficient for the partial drying of the articles in the hot drying zone(s); and for further drying in the warm drying zones; further taking into account potential energy losses and the residual heat energy in the exhaust second drying medium.

In the present method, heat is recovered from the exhaust drying medium of the hot drying zone(s) via a series of two or more heat recovery means. The recovered heat is then used for heating a second drying medium to a temperature below the temperature of the first drying medium, thus obtaining a heated second drying medium; followed by directing the heated second drying medium to the articles to be dried in the warm drying zones. During the main phase of the present method, only heat recovered from the exhaust first drying medium is used for heating the second drying medium - i.e. no additional heat from other sources is provided. In this way, considerable savings can be made on the drying costs. Accordingly, no additional heating means are used during the main phase. This is in contrast with conventional drying methods, wherein the recovered heat is typically used for pre-heating combustion air.

Accordingly, provided herein is a method for drying articles to be dried, comprising at least a main phase comprising:
- advancing articles to be dried along a path;
- heating a first drying medium to a temperature above 140°C via first heating means, and directing the heated first drying medium to said sheets in a hot drying zone;
- recovering heat from exhaust drying medium of said hot drying zone via a series of two or more heat recovery means and using the recovered heat for heating a second drying medium to a temperature below the temperature of said first drying medium without additional heating means, and directing the heated second drying medium to said sheets in a plurality of warm drying zones downstream of said hot drying zone wherein:
   - the cooled exhaust drying medium from upstream heat recovery means is passed over neighboring downstream recovery means; and
   - for each of said two or more heat recovery means, the recovered heat is directed to one or more warm drying zones associated with that heat recovery means.

This will be explained further herein below.

The articles to be dried (also referred to herein as "articles") in the method described herein are preferably sheet materials. Examples of typical sheet materials requiring drying during manufacture are building boards such as plasterboard and/or fiber cement boards. The method described herein is particularly suitable for the drying of plasterboard during the manufacture thereof. Thus, in particularly preferred embodiments, the articles are plasterboard. The term "plasterboard" as used herein refers to a panel or board comprising a gypsum core, obtainable from a plaster slurry as known in the art. More particularly, the term "plasterboard" refers to a board or panel which is obtainable via the setting (hydration) of plaster. The term "board" or "panel" as used herein refers to any type of wall, ceiling or floor component of any required size.

The articles to be dried are advanced along a path. This can be done via a conveying device known in the art. The method described herein is particularly suitable for continuous processes, wherein the articles are continuously moving along the path. In the case of sheet materials, the articles may be stacked in multiple layers or levels (preferably with some space between the sheets, e.g. stacked on a rack) in order to increase the capacity. Additionally or alternatively, a plurality of stacked conveyors may be provided.

The main phase of the method described herein contains two main stages, more particularly a hot stage and a warm stage. In the hot stage, the articles are brought into one or more drying chambers at a relatively high temperature. In the warm stage, which follows the hot stage, the articles are brought in a series of drying chambers at a lower temperature compared to the hot drying chamber(s). The drying chambers of the hot stage are also referred to herein as "hot drying zones. Similarly, the drying chambers of the warm stage are also referred herein as "warm drying zones". The use of a two-stage drying process as such is well known for drying sheet materials such as plasterboard, for example from US Patent 5,659,975.

The one or more hot drying zones are provided with a first drying medium which is heated via a heating means. The first drying medium is typically air. The skilled person will understand that the term "air" as used herein also includes combustion fumes obtained by combustion of a mixture of air and fuel. In particular, combustion air and the resulting combustion fumes are both referred to herein as "first drying medium". Typically, in each of the one or more hot drying zones, the temperature of the first drying medium is between 140°C and 350°C. In preferred embodiments, the temperature of the first drying medium is above 150°C. More preferably, the temperature ranges from 200°C to 300°C. This temperature range is particularly useful for drying sheet materials such as plasterboard. The type of heating means is not critical. Conventional heating means include burners, wherein air as drying medium is mixed with a fuel, followed by fuel combustion.

The heated first drying medium is directed, typically by means of fans, to the articles present in the hot drying zone. In this way, the articles are heated and the water present in the articles at least partially evaporates; whereas the temperature of the first drying medium decreases and the humidity of the first drying medium increases. In order to keep the process going, fresh heated first drying medium is continuously provided to the hot drying zone, and exhaust first drying medium is continuously removed from the hot drying zone. In preferred embodiments, a circulation process is used, wherein a large part of the drying medium is recirculated, and only a small part of the drying medium is discharged as exhaust drying medium. The use of such recirculation process as such is known in the art.

The exhaust first drying medium typically has a temperature well above 100°C and is relatively humid, and thus contains a considerable amount of (sensible and latent) heat energy. In the present method, heat from the exhaust first drying medium is recovered for (directly or indirectly) heating a second drying medium, which is used for heating the articles in the warm stage. The second drying medium is typically air.

The heat from the first drying medium is recovered via a series of two or more heat recovery means. Suitable heat recovery means include, but are not limited to heat exchangers, heat pumps, scrubbers, or combinations thereof.

In particular embodiments, the heat recovery means comprise one or more heat exchangers. In a heat exchanger (HE), heat from the exhaust first drying medium is transferred to another medium (heat sink), which can be the second drying medium or an intermediate medium.

In particular embodiments, the HE may be a gas/gas HE. In such embodiments, the first gas will typically be the exhaust first drying medium, whereas the second gas is the second drying medium.

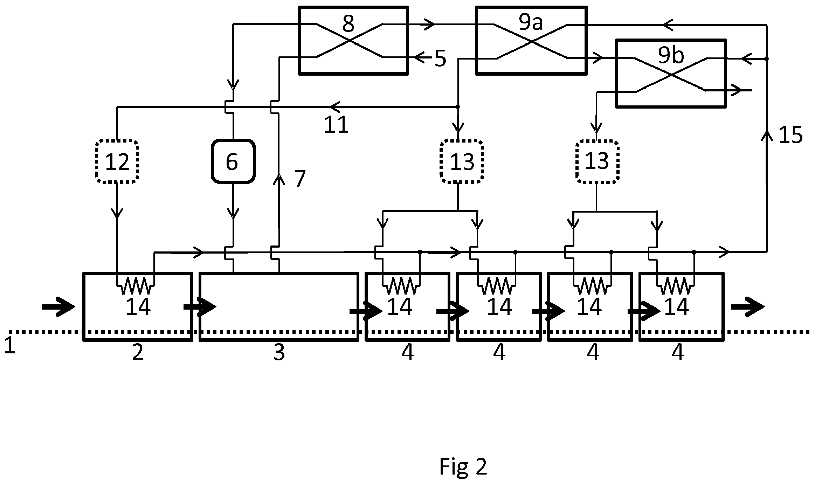

In certain embodiments, the HE may be a gas/liquid HE. In those embodiments, the gas will typically be the exhaust first drying medium, whereas the liquid is an intermediate medium. Heat from the intermediate medium is then typically transferred to the second drying medium via one or more other HEs. Advantageously, a closed circuit may be used for the liquid medium (see further in the discussion of Fig. 2).

The liquid is typically selected based on the temperatures involved, and is preferably selected from oil, water, propylene glycol, or mixtures thereof. The use of a gas/liquid HE may reduce the consumption of secondary energy compared to a gas/gas HE, as the circulation of the liquid medium typically requires narrower pipes compared to gaseous media. The narrow pipes also require a smaller investment in insulation. The present inventors further found that the use of liquid media can allow for a better temperature control in the warm zones.

In particular embodiments, the heat recovery means may include a scrubber, in particular a wet scrubber. Scrubbers are typically used for removing pollutants or the like from industrial exhaust streams, but can also be used for heat recovery from hot gases. In the method described herein, scrubbers can perform the dual function of heat recovery from exhaust first drying medium, as well as removing pollutants from the exhaust first drying medium.

In particular embodiments, a wet scrubber may be used wherein the exhaust first drying medium is contacted with a scrubbing solution, which is often water-based. Heat (and pollutants) from the first drying medium are then transferred to the scrubbing solution, which acts as an intermediate medium. Heat from the scrubbing solution can then be transferred to the second drying medium via one or more other HEs. Various types of (wet) scrubbers known in the art may be used in the context of the present invention. A particularly efficient heat transfer may be realized using the device described in patent application WO 2016/071648. In particular embodiments, a plurality of serially arranged scrubbers may be used.

In particular embodiments, the heat recovery means may include one or more heat pumps. Heat pumps can go further than the spontaneous heat transfer as occurring in a HE or scrubber, and therefore allow for recovering more heat from the exhaust first drying medium. A disadvantage is that external power is required to accomplish the work of transferring the energy.

In the present method, a plurality of warm drying zones is used. Compared to a single large warm drying zone, a plurality of smaller warm drying zones require less energy for air circulation, thus reducing the total energy demand of the method. In particular embodiments, at least three warm drying zones are used, preferably at least five. In certain embodiments, ten or more warm drying zones are used. The plurality of warm drying zones are provided in a serial configuration along the path followed by the articles to be dried, i.e. the articles following the path will consecutively pass through each warm drying zone.

In the warm drying zones, the second drying medium which is heated using heat recovered from the exhaust first drying medium is directed to the articles to be dried. The temperature of the second drying medium in the warm zones is lower than the temperature of the first drying medium in the hot drying zone(s). The temperature in the various warm zones may be the same or different, and may be changed depending on certain parameters measured during the process, such as the temperature and humidity of the exhaust drying medium in each warm drying zone. In preferred embodiments, in each of the warm drying zones, the temperature of the second drying medium may independently range from 60°C to 140°C, preferably from 60°C to 130°C. In further embodiments, the temperature may range between 60°C and 120°C. In yet further embodiments, the temperature may range between 65° to 100°C, preferably between 90°C and 100°C, and more particularly between 95°C and 100°C. In particular when heat exchangers or scrubbers are used as heat exchangers, the use of such low temperatures for the second drying medium allows for recovering both latent heat (from condensation) as sensible heat (from cooling) from the exhaust first drying medium, whereas at higher temperatures the recovered heat is almost exclusively sensible heat.

In particular embodiments, at least one of the heat recovery means used for recovering heat from the exhaust first drying medium, is associated with two or more warm drying zones. In other words, at least one of the heat recovery means recovers heat from the exhaust first drying medium, wherein the recovered heat is used for heating a second drying medium used in at least two of the warm drying zones. In preferred embodiments, at least one of the heat recovery means is associated with at least three, five, or even ten warm drying zones.

The temperature in each warm drying zone can still be regulated via the relative flow of heated second drying medium (or intermediate medium) to the warm drying zones. The use of a single heat recovery means for providing heat to a plurality of warm drying zones allows for an efficient heat transfer. In this way, less secondary energy is used.

The exhaust first drying medium is passed over a series of two or more heat recovery means, wherein:
- the cooled exhaust drying medium from upstream heat recovery means is passed over neighboring downstream recovery means; and
- for each of said one or more heat recovery means, the recovered heat is directed to one or more warm drying zones associated with that heat recovery means.

Accordingly, there is a cascade of heat recovery means. If the heat recovery means are heat exchangers or scrubbers, each heat recovery means will typically heat the second drying medium (or intermediate medium) to a lower temperature than the previous one. The use of heat pumps can overcome this limitation.

In particular embodiments, not all of the heat recovered from the exhaust first drying medium is used for heating the second drying medium. Indeed, optionally, a part of the heat of the exhaust first drying medium may also be recovered for pre-heating fresh first drying air prior to combustion. In particular embodiments, a dedicated heat recovery means such as a heat exchanger, scrubber, or heat pump, may be used for this. Further heat of the exhaust first drying medium may then be recovered via two or more other heat recovery means as described above, for heating the second drying medium.

In particular embodiments, the articles to be dried enter a sealing zone wherein the articles are preheated prior to entering the hot drying zone(s). Accordingly, the sealing zone is provided upstream of the hot drying zone(s). In addition to preheating the articles, the sealing zone functions as a pressure buffer between the hot drying zone and the outside atmosphere. As such, the use of sealing zones is known in the art. The temperature in the sealing zone is lower than the temperature of the hot drying zone(s) and is preferably similar to the temperature of the warm drying zones. In particular embodiments, the heat recovered from the exhaust first drying medium by the heat recovery means as described above, may be partially used for providing heat energy to articles in the sealing zone.

As described above, the present method is particularly suitable for continuous processes. However, when starting the process, no articles to be dried are typically present in the hot drying zone(s). The first drying medium is typically not being heated until the articles reach the hot zone(s), such that it is not possible to heat the sealing zone using recovered heat. Therefore, the present inventors found that a second heating means may be provided for heating the articles in the sealing zone, until the recovered heat is sufficient for heating the sealing zone. In this way, incomplete drying of the articles can be prevented. The second heating means is not used in the main phase, but only during a start-up phase preceding the main phase. Accordingly, in particular embodiments, the heat recovered from the exhaust first drying medium may be used partially for providing heat energy to the articles to be dried in a sealing zone upstream of the one or more hot drying zones; wherein the main phase is preceded by a start-up phase, wherein:
- further heat energy is provided to the sheets in the sealing zone via additional heating means such as a burner; and
- said second heating means are turned off when said heated second drying medium provides sufficient heat for reaching a target temperature in said sealing zone. Typically, the second heating means are not turned off abruptly. Instead, the heating power of the second heating means can be reduced gradually during the start-up phase.

All features described herein for the main phase (including but not limited to the advancing of the sheets along a path; the heating of the first drying medium via heating means; and the recovery of heat from exhaust drying medium of the hot zone) are, *mutatis mutandis,* applicable to the start-up phase; with the exception that in the start-up phase, additional heating means are used for the further heating of that part of the second drying medium which is directed to the sealing zone.

As described above, the method described herein is particularly useful for continuous drying processes. A special phase of such processes is the shutdown phase, wherein the last articles to be dried move along the path, followed by shutdown of the process. At one point in this phase, no articles will be present anymore in the hot drying zones, whereas articles are still present in the warm drying zones. As fewer articles are present in the hot drying zone(s), the heating power of the heating means associated with the hot drying zone(s) will typically be reduced in order to save energy; and the heating means may be turned off entirely when the last articles exit the hot zone(s). As fewer articles are being dried in the hot zone(s), also the humidity of the exhaust first drying medium starts to reduce. Accordingly, the second drying medium can no longer be heated well using recovered (latent and sensible) heat of exhaust first drying medium. Therefore, additional heating means such as a burner may be provided for heating the second drying medium, either directly or via an intermediate medium, during a shutdown phase of the method. In this way, incomplete drying of the articles can be prevented. In particular, the main phase may be followed by a shutdown phase, wherein:
- the first heating means are shut down; and
- said second drying medium directed to said warm drying zones is heated using additional heating means.

In particular embodiments, further heat may be recovered from the exhaust second drying medium from the warm drying zones. This may be done in all phases of the method described herein. In particular, recovery of the latent heat through condensation of the water vapor allows for further heat recovery. The recovered heat may be used for preheating the first drying medium, the second drying medium, and/or an intermediate medium. In particular embodiments, the recovered heat is used for heating the first drying medium. The condensation of the water vapor can also allow for liquid water recovery, which is particularly relevant when carrying out the method in regions where water is scarce.

Due to the relatively low temperature of the warm drying zones in the present method, the articles to be dried will typically require a longer drying time compared to drying methods using higher temperatures. For example, for plasterboard about 60 to 80 minutes would be needed instead of 40 minutes. Therefore, the articles to be dried will typically move slower along the path and/or the path followed by the articles will be longer compared to other drying methods. Preferably, the path is made longer, such that the amount of articles dried per unit remains unchanged.

The hot drying zone(s), warm drying zones, and sealing zone may be independently selected among various types of drying chambers known in the art. A characteristic feature of different types of construction of drying zones is the type of air guiding over the material to be dried. Typically, the air is guided onto the material in the form of cross aeration, longitudinal aeration, or impingement jet aeration.

In the case of cross aeration, the drying medium (such as air) is guided over the articles to be dried from the side, transversely to the direction of the path followed by the articles. In the case of longitudinal aeration, the drying medium flows over the articles to be dried in the direction of the path, or in the opposite direction. In the case of impingement jet aeration, the drying medium is fed from the side of the drying chamber in air lines, in so-called nozzle boxes, and, via air-exit nozzles, is blown perpendicularly onto the surface of the material to be dried. From there, the air typically flows to the opposite side of the drying chamber. The use of impingement jet aeration is particularly advantageous for the drying of sheet materials such as plasterboard. Examples of suitable impinging jet aeration dryers are provided in patent application US 2012/0246966.

In particular embodiments, the hot and/or warm drying zones may dry the articles via impinging jet aeration. Accordingly, the hot and/or warm drying zones may comprise impinging jet nozzles. In preferred embodiments, all of the hot and warm drying zones dry the articles via impinging jet aeration.

Further provided herein is an arrangement for drying articles, which is adapted for carrying out the method described herein. More particularly, provided herein is an arrangement for drying articles, in particular sheet materials such as plasterboard, comprising:
- means for advancing articles to be dried, in particular sheets, along a path in a travel direction;
- one or more hot drying zones at an upstream portion of said path, comprising means for heating a first drying medium to a temperature of at least 140°C; and associated means configured for conveying the heated first drying medium towards sheets on said path;
- a series of two or more heat recovery means configured for recovering heat from exhaust drying medium of said hot drying zone and for heating a second drying medium using the recovered heat wherein said heat recovery means are configured for passing the cooled exhaust drying medium from upstream heat recovery means over downstream recovery means and for each of said two or more heat recovery means directing the recovered heat to one or more warm drying zones associated with that heat recovery means; and
- a plurality of warm drying zones downstream of said hot drying zone, comprising means configured for conveying a heated second drying medium towards sheets on said path.

The means for advancing articles may comprise a conveying device such as a roller conveyor or belt conveyor. In particular the conveying device may comprise a stack of conveying devices as described above; e.g. a multilayer roller conveyor or multilayer conveyor belt.

The heating means of the hot drying zone(s) typically are burners as described above. The means for conveying the heated first drying medium such as air may be one or more fans or the like. The relative position of the burner and fan are not critical. The present inventors found that when the fan is positioned after the burner, a better mixing can be obtained; whereas a configuration wherein the burner is positioned after the fan generally requires less fan maintenance.

The plurality of warm drying zones is typically provided in a serial configuration as described above. Again, the means for conveying the heated second drying medium such as air may be one or more fans or the like.

The heat recovery means may comprise one or more heat exchangers, scrubbers, and/or heat pumps as described above. The heat recovery means may transfer the heat directly to the second drying medium, or via an intermediate medium as described above. In preferred embodiments, the heat recovery means comprise one or more air/liquid heat exchangers as described above.

In particular embodiments, at least one of the two or more heat recovery means may be associated with two or more warm drying zones, as described above.

The arrangement comprises a series of two or more heat recovery means for recovering heat from exhaust drying medium of the hot drying zone; configured for:
- passing the cooled exhaust drying medium from upstream heat recovery means over downstream recovery means; and
- for each of said two or more heat recovery means, directing the recovered heat to one or more hot drying zones associated with that heat recovery means. The term "cooled exhaust drying medium" as used herein means the exhaust drying medium from which heat is recovered. The skilled person will understand that the term "cooled" does not mean that no further heat can be recovered from the drying medium by a further heat recovery means.

In preferred embodiments, the hot and warm drying zones are adapted for drying the articles via impinging jet aeration, as described above. Accordingly, the hot and warm drying zones may comprise impinging jet nozzles.

### EXAMPLES

The following examples are provided for the purpose of illustrating the present invention and by no means are meant and in no way should be interpreted to limit the scope of the present invention.

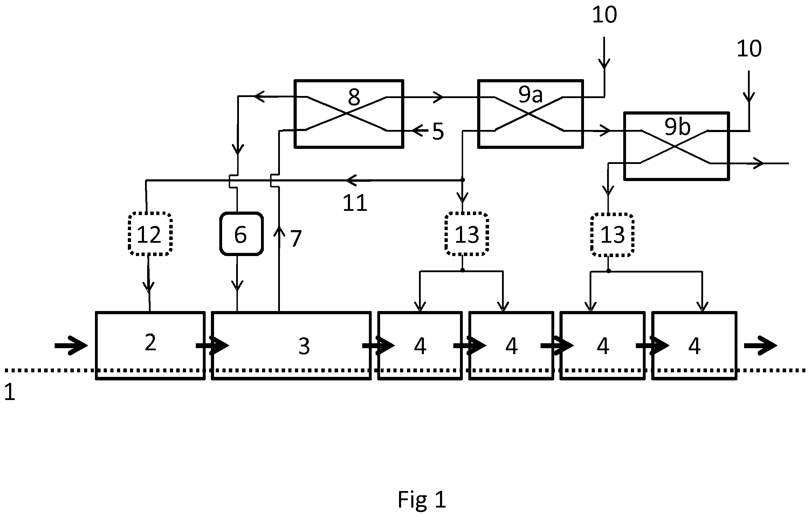

**Fig. 1** is a schematic representation of a particular embodiment of an arrangement for drying articles as described herein. The arrangement is particularly suitable for drying sheet materials such as plasterboard.

The sheet materials (not shown) are positioned on a conveyor (1) represented by a dotted line, and are transported in the direction of the bold arrows. The conveyor may be a multilayer (i.e. multi-level) conveyor. The sheets first enter a sealing zone (2) wherein the sheets are preheated prior to entering a hot zone (3) wherein a first drying step occurs. A plurality of hot zones in a serial configuration may be provided instead of a single hot zone (3) as shown in Fig. 1. After the hot zone(s) (3), the sheets enter a series of warm zones (4) wherein the sheets are dried further. The hot zone (3) and warm zones (4) dry the sheets via impinging jet aeration.

Fresh first drying medium (5) such as air at room temperature is heated via a heat exchanger (8, see further) and a burner (6) to a temperature of about 250°C and subsequently directed to articles to be dried in the hot zone (3). The first drying medium is recirculated in the hot zone (3). New heated first drying medium is added and exhaust first drying medium is discharged from the hot zone (3) in a continuous way. The exhaust first drying medium has a temperature of about 150°C and is directed via an exhaust conduit (7) to a heat exchanger (8) where heat from the exhaust first drying medium is transferred to fresh first drying medium (5). In this way, the fresh first drying medium at room temperature is preheated to a temperature of about 140°C before being heated further by the burner. The exhaust first drying medium cools to a temperature of about 110°C and is directed to a series of two heat exchangers (9a and 9b) wherein further heat from the exhaust first drying medium is recovered and used for heating fresh second drying medium (10) such as air to a temperature of about 95°C. The final temperature of the exhaust first drying medium is about 50°C, and its water content has reduced significantly due to condensation. Accordingly, both latent heat as sensible heat is recovered.

The heated second drying medium is directed to the plurality of warm zones (4). The temperatures of the warm zones (4) can be regulated independently by regulating the flow of second drying medium through each warm zone (4).

The heated second drying medium is also directed to the sealing zone (2) via a conduit (11) and is used for preheating the sheets in the sealing zone (2). During the start-up phase of the drying process, additional heat can be provided by a start-up phase burner (12) as long as the second drying medium is not warm enough.

Likewise, in a shutdown phase (wherein the heating power of the burner (6) of the hot zone (3) is gradually reduced as fewer sheets are present in the hot zone), the second drying medium directed to the warm zones (4) can be heated further via a shutdown phase burner (13) when the second drying medium is not warm enough..

Optionally, further heat may be recovered from the exhaust drying medium (not shown). For example, such heat may be used for pre-heating fresh first drying medium (5).

**Fig. 2** is a schematic representation of a particular embodiment of an arrangement for drying articles as described herein. The arrangement is similar to the arrangement of Fig. 1, with the difference that the two heat exchanger (9a and 9b) are gas/liquid HE instead of a gas/gas HE. Accordingly, the heat exchangers (9a and 9b) do not directly heat the second drying medium, but heat a liquid intermediate medium (e.g. oil, water, propylene glycol, or a water/propylene glycol mixture), which then heats the second drying medium via additional heat exchangers (14) in the warm drying zones (4) and the sealing zone (2). The intermediate medium circulates in a closed circuit (15).

## Claims

1. A method for drying sheets, in particular plasterboard, comprising a main phase, said main phase comprising:
- advancing sheets to be dried along a path;
- heating a first drying medium to a temperature above 140°C via first heating means, and directing the heated first drying medium to said sheets in a hot drying zone (3);
- recovering heat from exhaust drying medium of said hot drying zone (3) via a series of two or more heat recovery means and using the recovered heat for heating a second drying medium to a temperature below the temperature of said first drying medium without additional heating means, and directing the heated second drying medium to said sheets in a plurality of warm drying zones (4) downstream of said hot drying zone (3),
wherein:
- the cooled exhaust drying medium from upstream heat recovery means is passed over downstream recovery means; and
- for each of said two or more heat recovery means, the recovered heat is directed to one or more warm drying zones (4) associated with that heat recovery means.

2. The method according to claim 1, wherein at least one of said two or more heat recovery means is associated with two or more warm drying zones (4).

3. The method according to claim 1 or 2, wherein said first drying medium is heated to a temperature above 200°C.

4. The method according to any one of claims 1 to 3, wherein in each of said warm drying zones (4), the temperature of said second drying medium independently ranges from 60°C to 130°C.

5. The method according to any one of claims 1 to 4, wherein said hot and warm drying zones (3,4) comprise impinging jet nozzles.

6. The method according to any one of claims 1 to 5, wherein said two or more heat recovery means are heat exchangers (9a,9b).

7. The method according to claim 6, wherein said two or more heat recovery means comprise one or more air/liquid heat exchangers (9a,9b).

8. The method according to any one of claims 1 to 7, wherein said recovered heat is partially used for providing heat energy to sheets in a sealing zone (2) upstream of said hot drying zone (3); and wherein said main phase is preceded by a start-up phase wherein:
- further heat energy is provided to the sheets in said sealing zone (2) via second heating means such as a burner (12); and
- said second heating means are turned off when said heated second drying medium provides sufficient heat for reaching a target temperature in said sealing zone (2).

9. The method according to any one of claims 1 to 8, further comprising the step of recovering heat from exhaust second drying medium.

10. An arrangement for drying sheets, in particular plasterboard, comprising:
- means for advancing sheets to be dried along a path in a travel direction;
- a hot drying zone (3) at an upstream portion of said path, comprising means configured for heating a first drying medium to a temperature of at least 140°C; and associated means configured for conveying the heated first drying medium towards sheets on said path;
- a series of two or more heat recovery means configured for recovering heat from exhaust drying medium of said hot drying zone (3) and for heating a second drying medium using the recovered heat in order to obtain a heated second drying medium wherein said heat recovery means are configured for passing the cooled exhaust drying medium from upstream heat recovery means over downstream recovery means and for each of said two or more heat recovery means, directing the recovered heat to one or more warm drying zones (4) associated with that heat recovery means;
and
- a plurality of warm drying zones (4) downstream of said hot drying zone (3), comprising means configured for conveying said heated second drying medium towards sheets on said path.

11. The arrangement according to claim 10, wherein at least one of said two or more heat recovery means is associated with two or more warm drying zones (4).

12. The arrangement according to claim 10 or 11, wherein said hot and warm drying zones (3,4) comprise impinging jet nozzles.

13. The arrangement according to any one of claims 10 to 12, wherein said two or more heat recovery means comprise one or more air/liquid heat exchangers (9a,9b).

## Patentansprüche

1. Verfahren zum Trocknen von Platten, insbesondere von Gipskartonplatten, umfassend eine Hauptphase, wobei die Hauptphase Folgendes umfasst:
- Vorschieben der zu trocknenden Platten entlang eines Pfades;
- Erwärmen eines ersten Trocknungsmediums auf eine Temperatur von über 140 °C über ein erstes Heizmittel und Leiten des erwärmten ersten Trocknungsmediums zu den Bahnen in einer heißen Trocknungszone (3);
- Rückgewinnen von Wärme aus dem Ablufttrocknungsmedium der heißen Trocknungszone (3) über eine Reihe von zwei oder mehr Wärmerückgewinnungsmitteln und Verwenden der rückgewonnenen Wärme zum Erwärmen eines zweiten Trocknungsmediums auf eine Temperatur unterhalb der Temperatur des ersten Trocknungsmediums ohne zusätzliche Heizmittel, und Leiten des erwärmten zweiten Trocknungsmediums zu den Bahnen in einer Vielzahl von warmen Trocknungszonen (4) stromabwärts der heißen Trocknungszone (3),
wobei:
- das abgekühlte Ablufttrocknungsmedium aus vorgelagerten Wärmerückgewinnungsmitteln über nachgelagerte Rückgewinnungsmittel geleitet wird; und
- für jede der zwei oder mehr Wärmerückgewinnungsmittel die zurückgewonnene Wärme in eine oder mehrere warme Trocknungszonen (4) geleitet wird, die diesen Wärmerückgewinnungsmitteln zugeordnet sind.

2. Verfahren nach Anspruch 1, wobei mindestens eines der zwei oder mehr Wärmerückgewinnungsmittel zwei oder mehr warmen Trocknungszonen (4) zugeordnet ist.

3. Verfahren nach Anspruch 1 oder 2, wobei das erste Trocknungsmedium auf eine Temperatur von über 200 °C erwärmt wird.

4. Verfahren nach einem der Ansprüche 1 bis 3, wobei in jeder der warmen Trocknungszonen (4) die Temperatur des zweiten Trocknungsmediums unabhängig voneinander im Bereich von 60 °C bis 130 °C liegt.

5. Verfahren nach einem der Ansprüche 1 bis 4, wobei die heißen und warmen Trocknungszonen (3, 4) auftreffende Strahldüsen umfassen.

6. Verfahren nach einem der Ansprüche 1 bis 5, wobei die zwei oder mehr Wärmerückgewinnungsmittel Wärmetauscher (9a, 9b) sind.

7. Verfahren nach Anspruch 6, wobei die zwei oder mehr Wärmerückgewinnungsmittel einen oder mehrere Luft-/Flüssigkeits-Wärmetauscher (9a, 9b) umfassen.

8. Verfahren nach einem der Ansprüche 1 bis 7, wobei die zurückgewonnene Wärme teilweise dazu verwendet wird, Wärmeenergie für Bahnen in einer Dichtungszone (2) bereitzustellen, die der heißen Trocknungszone (3) vorgelagert ist; und wobei der Hauptphase eine Anlaufphase vorausgeht, wobei:
- ferner Wärmeenergie an die Bahnen in der Dichtungszone (2) über ein zweites Heizmittel, beispielsweise einen Brenner (12), bereitgestellt wird; und
- die zweiten Heizmittel abgeschaltet werden, wenn das erwärmte zweite Trocknungsmedium ausreichend Wärme zum Erreichen einer Zieltemperatur in der Dichtungszone (2) bereitstellt.

9. Verfahren nach einem der Ansprüche 1 bis 8, ferner umfassend den Schritt der Wärmerückgewinnung aus dem zweiten Ablufttrocknungsmedium.

10. Vorrichtung zum Trocknen von Platten, insbesondere Gipskartonplatten, umfassend:
- Mittel zum Vorschub der zu trocknenden Bahnen entlang eines Pfades in einer Verfahrrichtung;
- eine heiße Trocknungszone (3) an einem vorgelagerten Abschnitt des Pfades, die Mittel umfasst, die zum Erwärmen eines ersten Trocknungsmediums auf eine Temperatur von mindestens 140 °C konfiguriert sind; und zugehörige Mittel, die für den Transport des erwärmten ersten Trocknungsmediums zu den Bahnen auf diesem Pfad konfiguriert sind;
- eine Reihe von zwei oder mehr Wärmerückgewinnungsmitteln, die dafür konfiguriert sind, um Wärme aus dem Ablufttrocknungsmedium der heißen Trocknungszone (3) zurückzugewinnen und ein zweites Trocknungsmedium unter Verwendung der zurückgewonnenen Wärme zu erwärmen, um ein erwärmtes zweites Trocknungsmedium zu erhalten, wobei die Wärmerückgewinnungsmittel dafür konfiguriert sind, um das gekühlte Ablufttrocknungsmedium von den vorgelagerten Wärmerückgewinnungsmitteln über die nachgelagerten Rückgewinnungsmittel zu leiten und für jedes der zwei oder mehr Wärmerückgewinnungsmittel die zurückgewonnene Wärme zu einer oder mehreren warmen Trocknungszonen (4) zu leiten, die dieser Wärmerückgewinnungsmittel zugeordnet sind;
und
- eine Vielzahl von warmen Trocknungszonen (4) stromabwärts der heißen Trocknungszone (3), die Mittel umfassen, die dafür konfiguriert sind, um das erwärmte zweite Trocknungsmedium zu den Bahnen auf dem Pfad zu befördern.

11. Anordnung nach Anspruch 10, wobei mindestens eines der zwei oder mehr Wärmerückgewinnungsmittel zwei oder mehr warmen Trocknungszonen (4) zugeordnet ist.

12. Anordnung nach Anspruch 10 oder 11, wobei die heißen und warmen Trocknungszonen (3, 4) auftreffende Strahldüsen umfassen.

13. Anordnung nach einem der Ansprüche 10 bis 12, wobei die zwei oder mehr Wärmerückgewinnungsmittel einen oder mehrere Luft-/Flüssigkeits-Wärmetauscher (9a, 9b) umfassen.

## Revendications

1. Procédé pour sécher des feuilles, en particulier une plaque de plâtre, comprenant une phase principale, ladite phase principale comprenant :
- le fait de faire avancer des feuilles à sécher le long d'une trajectoire ;
- le fait de chauffer un premier milieu de séchage à une température supérieure à 140 °C par l'intermédiaire de premiers moyens de chauffage, et de diriger le premier milieu de séchage chauffé vers lesdites feuilles dans une zone de séchage chaude (3) ;
- le fait de récupérer de la chaleur d'un milieu de séchage d'échappement de ladite zone de séchage chaude (3) par l'intermédiaire d'une série de deux ou plusieurs moyens de récupération de chaleur et d'utiliser la chaleur récupérée pour chauffer un second milieu de séchage à une température inférieure à la température dudit premier milieu de séchage sans moyens de chauffage supplémentaires, et de diriger le second milieu de séchage chauffé vers lesdites feuilles dans une pluralité de zones de séchage tièdes (4) en aval de ladite zone de séchage chaude (3),
dans lequel :
- le milieu de séchage d'échappement refroidi provenant de moyens de récupération de chaleur en amont est passé jusqu'à des moyens de récupération en aval ; et
- pour chacun desdits deux ou plusieurs moyens de récupération de chaleur, la chaleur récupérée est dirigée vers une ou plusieurs zones de séchage tièdes (4) associées à ces moyens de récupération de chaleur.

2. Procédé selon la revendication 1, dans lequel au moins l'un desdits deux ou plusieurs moyens de récupération de chaleur est associé à deux ou plusieurs zones de séchage tièdes (4).

3. Procédé selon la revendication 1 ou 2, dans lequel ledit premier milieu de séchage est chauffé à une température supérieure à 200 °C.

4. Procédé selon l'une quelconque des revendications 1 à 3, dans lequel dans chacune desdites zones de séchage tièdes (4), la température dudit second milieu de séchage varie indépendamment de 60 °C à 130 °C.

5. Procédé selon l'une quelconque des revendications 1 à 4, dans lequel lesdites zones de séchage chaudes et tièdes (3, 4) comprennent des buses à courants contrariés.

6. Procédé selon l'une quelconque des revendications 1 à 5, dans lequel lesdits deux ou plusieurs moyens de récupération de chaleur sont des échangeurs de chaleur (9a, 9b).

7. Procédé selon la revendication 6, dans lequel lesdits deux ou plusieurs moyens de récupération de chaleur comprennent un ou plusieurs échangeurs de chaleur air/liquide (9a, 9b).

8. Procédé selon l'une quelconque des revendications 1 à 7, dans lequel ladite chaleur récupérée est partiellement utilisée pour fournir une énergie de chaleur à des feuilles dans une zone d'étanchéité (2) en amont de ladite zone de séchage chaude (3) ; et dans lequel ladite phase principale est précédée d'une phase de démarrage, dans lequel :
- davantage d'énergie de chaleur est fournie aux feuilles dans ladite zone d'étanchéité (2) par l'intermédiaire de seconds moyens de chauffage tels qu'un brûleur (12) ; et
- lesdits seconds moyens de chauffage sont désactivés lorsque ledit second milieu de séchage chauffé fournit une chaleur suffisante pour atteindre une température cible dans ladite zone d'étanchéité (2).

9. Procédé selon l'une quelconque des revendications 1 à 8, comprenant en outre l'étape de récupération de la chaleur provenant d'un second milieu de séchage d'échappement.

10. Agencement pour sécher des feuilles, en particulier une plaque de plâtre, comprenant :
- des moyens pour faire avancer des feuilles à sécher le long d'une trajectoire dans une direction de déplacement ;
- une zone de séchage chaude (3) au niveau d'une partie en amont de ladite trajectoire, comprenant des moyens configurés pour chauffer un premier milieu de séchage à une température d'au moins 140 °C ; et des moyens associés configurés pour transférer le premier milieu de séchage chauffé vers des feuilles sur ladite trajectoire ;
- une série de deux ou plusieurs moyens de récupération de chaleur configurés pour récupérer de la chaleur provenant d'un milieu de séchage d'échappement de ladite zone de séchage chaude (3) et pour chauffer un second milieu de séchage en utilisant la chaleur récupérée afin d'obtenir un second milieu de séchage chauffé dans lequel lesdits moyens de récupération de chaleur sont configurés pour faire passer le milieu de séchage d'échappement refroidi depuis des moyens de récupération de chaleur en amont jusqu'à des moyens de récupération en aval et pour chacun desdits deux ou plusieurs moyens de récupération de chaleur, diriger la chaleur récupérée vers une ou plusieurs zones de séchage tièdes (4) associées à ces moyens de récupération de chaleur ;
et
- une pluralité de zones de séchage tièdes (4) en aval de ladite zone de séchage chaude (3), comprenant des moyens configurés pour transférer ledit second milieu de séchage chauffé vers des feuilles sur ladite trajectoire.

11. Agencement selon la revendication 10, dans lequel au moins l'un desdits deux ou plusieurs moyens de récupération de chaleur est associé à deux ou plusieurs zones de séchage tièdes (4).

12. Agencement selon la revendication 10 ou 11, dans lequel lesdites zones de séchage chaudes et tièdes (3, 4) comprennent des buses à courants contrariés.

13. Agencement selon l'une quelconque des revendications 10 à 12, dans lequel lesdits deux ou plusieurs moyens de récupération de chaleur comprennent un ou plusieurs échangeurs de chaleur air/liquide (9a, 9b).
